# EUROPEAN PATENT APPLICATION

(11) **EP 4 563 539 A1**
(43) Date of publication of application: **04.06.2025**
(21) Application number: 24214820.3
(22) Date of filing: 22.11.2024
(51) Int. Cl.: C02F 1/32, C02F 1/78, C02F 101/30

(54) **METHOD AND PLANT FOR PESTICIDE DISPOSAL IN WASTEWATER**

(30) Priority: 28.11.2023 UA 202305717
(71) Applicant: Khomov, Volodymyr, 03148 Kyiv (UA)
(72) Inventor: Khomov, Volodymyr, 03148 Kyiv (UA)
(74) Representative: Zellentin & Partner mbB Patentanwälte

(57) **Abstract**

The present invention relates to the field of wastewater treatment, in particular, containing pesticides, and can be used in the agricultural sector or chemical industry. A method for pesticide disposal in wastewater comprises collecting wastewater in a tank, supplying wastewater from the tank to a closed hydraulic circuit for returning wastewater to the tank, wherein in the closed hydraulic circuit the wastewater is saturated with an ozone-air mixture, followed by dissolving ozone in it and treating the ozone-saturated water with ultraviolet radiation. In the closed hydraulic circuit a part of the wastewater after dissolving ozone in it is returned to the tank without treatment with ultraviolet radiation, and the other part of the wastewater after dissolving ozone in it is supplied to the tank after treatment with ultraviolet radiation. A plant for pesticide disposal in wastewater comprises a wastewater tank and a pump for supplying wastewater from the tank to a closed hydraulic circuit, which comprises sequentially arranged Venturi injector, the main inlet of which is connected to the pump for supplying water from the tank, and an additional inlet is connected to a means for forming an ozone-air mixture, a means for dissolving ozone in waste water located downstream of the venturi injector, and an ultraviolet emitter located downstream of the means for dissolving ozone in wastewater. According to the invention the plant comprises downstream of the means for dissolving ozone in wastewater a wastewater supply line to a wastewater tank and a parallel wastewater supply line to the wastewater tank at which said ultraviolet emitter is installed. The invention provides for a high universality of the process with respect to all types of pesticides, eliminates the necessity for consumable materials, ensures the absence of potentially harmful products requiring additional disposal, increases energy efficiency and significantly accelerates pesticide degradation.

## Description

The invention relates to the field of wastewater treatment, in particular, pesticide-containing wastewater, and can be used in the agricultural sector or the chemical industry.

The following methods of pesticide disposal in wastewater are known: combustion, via landfills, evaporation beds or by adsorption or settling, chemical destruction, etc. However, there are also significant disadvantages of these methods, in particular, combustion is characterized by increased energy consumption and the necessity of disposing the combustion products; landfills and evaporation beds are characterized by slow decomposition of products and limited service life, and the efficiency of the disposal process depends on the climate; adsorption or settling does not result in destruction, therefore, there is a necessity of disposing the products and sorbents; and the disadvantages of chemical destruction by means of oxidizing, reducing, hydrolytic or catalytic reagents are the high selectivity of the method, which results in the necessity for using various reagents for various types of pesticides, as well as high reagent consumption and the necessity of disposing the chemical destruction products, which increases the cost of known methods (M. T. Al Hattab, A. E. Ghaly, J. of Environment Protection, 2012, 3, 413-453).

Therefore, it is more efficient to treat wastewater by oxidation through sequential and combined treatment of wastewater with oxygen, ozone and ultraviolet radiation. One of the known methods and plants for wastewater treatment is a method and a plant described in KR20020088538 (A), publication date November 29, 2002. The known method provides for the disposal of pesticides in wastewater by collecting wastewater in a tank and pumping it from the tank to sequentially arranged tanks for ultraviolet treatment, followed by filtration of the treated water with activated carbon in a separate tank. The ozone-saturated wastewater from the bottom of one of these tanks is fed for additional ultraviolet treatment through two parallel hydraulic lines. Wastewater is fed into one of these lines by an injector having an additional inlet connected to an ozone generator, followed by ultraviolet treatment and return to the tanks. Wastewater is fed into the other of these lines by a pump, which then pumps this water for ultraviolet treatment and is returned to the tanks. This ensures cyclical treatment of wastewater and the removal of the purified water after the filtration with activated carbon. All water that is returned to the tanks for treatment via recirculation is treated with ultraviolet light. During the treatment of water with ultraviolet light, hydroxyl radicals with an extremely high oxidizing potential are formed. Therefore, the water that flows into the tanks for the recirculation does not have enough dissolved ozone, which results in a decrease of the oxidation potential of the recycled water and, consequently, in a decrease of the efficiency of the treatment process and in the necessity of increasing the cycles of the wastewater recirculation in the tanks. An additional disadvantage is the use of the filtration with activated carbon, which results in the necessity of monitoring the condition of the filters and periodic replacement of their filling.

As the closest prior art is considered a method and a plant for wastewater treatment from contaminants described in JP2002086168 (A), publication date March 26, 2002, is taken. The method according to the closes prior art comprises collecting wastewater in a tank, supplying wastewater from the tank into a closed hydraulic circuit to return the wastewater to the tank, wherein in the closed hydraulic circuit the wastewater is saturated with an ozone-air mixture, followed by dissolving ozone in it, and treating the ozone-saturated water with ultraviolet radiation. For the implementation of the described method, the plant according to the closest prior art comprises a wastewater tank and a pump for supplying wastewater from the tank to the closed hydraulic circuit, which comprises sequentially arranged Venturi injector, the main inlet of which is connected to the pump for supplying water from the tank, and an additional inlet is connected to a means of generating an ozone-air mixture, a means of dissolving ozone in wastewater located downstream of the Venturi injector, and an ultraviolet emitter located downstream of the means of dissolving ozone in wastewater. After the means of dissolving ozone, an additional hydraulic water supply line bypassing the ultraviolet emitter is formed, which supplies water to the inlet of the wastewater supply pump, as well as the hydraulic line where the ultraviolet emitter is located. Thus, wastewater recirculation in the closed hydraulic circuit is performed in two streams - a stream of wastewater with dissolved ozone and a stream of wastewater with dissolved ozone that has been treated with ultraviolet radiation. This solution reduces the risk of corrosion of the plant components, but also reduces the efficiency of the wastewater treatment process due to decreasing ozone dissolved in water in the wastewater collecting tank.

RO126301 relates to a process for the purification of water contaminated with hard-degradable chemical and biological compounds and to an oxidation module for the purification of contaminated water. The described process consists in treating water within a pressurized reaction vessel with gaseous ozone, followed by the advanced oxidation thereof by treatment with UV radiation which generates free radicals and chain oxidation reactions leading to complete mineralization of organic compounds, the treatment system delivering contaminant-free water with a residual ozone content of less than 0.01 mg/l.

The methods described in the state of the arts have some drawbacks.

The object of the present invention is to provide a method for pesticide disposal in wastewater and a plant for its implementation, which ensure high universality of the method with respect to all types of pesticides, eliminate the necessity for consumable materials, ensure the absence of potentially harmful products requiring additional disposal, increase energy efficiency and significantly accelerate pesticide degradation.

The object is solved in that in the known method for pesticide disposal in wastewater, which comprises collecting wastewater in a tank, supplying wastewater from the tank to a closed hydraulic circuit to return wastewater to the tank, wherein in the closed hydraulic circuit the wastewater is saturated with an ozone-air mixture with subsequent dissolution of ozone in it and treatment of ozone-saturated water with ultraviolet radiation, according to the present invention, in the closed hydraulic circuit, a part of the wastewater after dissolving ozone in it is returned to the tank without ultraviolet treatment, and another part of the wastewater after dissolving ozone in it is supplied to the tank after ultraviolet treatment.

The present invention refers to a method for pesticide disposal in wastewater, wherein the method comprises collecting wastewater in a tank, supplying wastewater from the tank to a closed hydraulic circuit for returning wastewater to the tank, wherein in the closed hydraulic circuit the wastewater is enriched with an ozone-air mixture, followed by dissolving ozone in it and treating the ozone-enriched water with ultraviolet radiation, characterized in that in the closed hydraulic circuit, a part of the wastewater, after dissolving ozone in it, is returned to the tank without treatment with ultraviolet radiation, and another part of the wastewater, after dissolving ozone in it, is supplied to the tank after treatment with ultraviolet radiation. In particular, the wastewater is enriched with ozone when exiting the Venturi injector, before the treatment with ultraviolet radiation.

The present invention refers to a method for fertilizers disposal in wastewater, wherein the method comprises collecting wastewater in a tank, supplying wastewater from the tank to a closed hydraulic circuit for returning wastewater to the tank, wherein in the closed hydraulic circuit the wastewater is enriched with an ozone-air mixture, followed by dissolving ozone in it and treating the ozone-enriched water with ultraviolet radiation, characterized in that in the closed hydraulic circuit, a part of the wastewater, after dissolving ozone in it, is returned to the tank without treatment with ultraviolet radiation, and another part of the wastewater, after dissolving ozone in it, is supplied to the tank after treatment with ultraviolet radiation. In particular, the wastewater is enriched with ozone when exiting the Venturi injector, before the treatment with ultraviolet radiation.

The present invention refers in a preferred embodiment to a method for pesticide disposal in wastewater, wherein the method comprises collecting wastewater in a tank, supplying wastewater from the tank to a closed hydraulic circuit for returning wastewater to the tank, wherein in the closed hydraulic circuit the wastewater is saturated with an ozone-air mixture, followed by dissolving ozone in it and treating the ozone-saturated water with ultraviolet radiation, characterized in that in the closed hydraulic circuit, a part of the wastewater after dissolving ozone in it is returned to the tank without treatment with ultraviolet radiation, and another part of the wastewater after dissolving ozone in it is supplied to the tank after treatment with ultraviolet radiation. In particular, the wastewater is saturated with ozone when exiting the Venturi injector, before the treatment with ultraviolet radiation.

The term "saturated" means in the sense of the invention that the wastewater contains the highest possible amount of ozone, e.g., 394 mg/L at0 °C.

Preferably, the invention relates to a method comprising the steps
a) collecting the wastewater in a tank T;
b) feeding the effluent from the wastewater tank into the hydraulic circuit;
c) optionally dividing the wastewater in two or more substreams;
d) leading the effluent from the wastewater tank of step b) or at least one of the substreams from step c) through a Venturi injector connected to an ozone generator, wherein the wastewater is brought into contact with ozone-air mixture to obtain a wastewater-ozone mixture;
e) combining the substream, if present;
f) mixing the ozone-containing stream in at least one mixer;
g) the wastewater-ozone mixture obtained in step f) is divided in at least two parallel streams
   g1) treating the wastewater-ozone mixture obtained in step f) with ultraviolet radiation and stream g1) returns back directly into the tank T or after recombination with at least one of the parallel streams;
   g2) stream g2) returns back without ultraviolet radiation treatment directly into the tank T or a after recombination with at least one of the parallel streams treated with ultraviolet radiation.

Further, the invention relates to a plant for pesticide disposal in wastewater comprising a wastewater tank and a pump for supplying wastewater from the tank to a closed hydraulic circuit comprising sequentially arranged a Venturi injector, the main inlet of which is connected to the pump for supplying water from the tank, characterized in that an additional inlet is connected to a means for generating an ozone-air mixture, a means for dissolving ozone in wastewater located downstream of the Venturi injector, and an ultraviolet emitter located downstream of the means for dissolving ozone in wastewater.

Preferably, the invention relates to a plant for pesticide disposal in wastewater comprising a wastewater tank and a pump for supplying wastewater from the tank to a closed hydraulic circuit comprising sequentially arranged a Venturi injector, the main inlet of which is connected to the pump for supplying water from the tank, characterized in that the Venturi injector comprises an additional inlet is connected to a means for generating an ozone-air mixture, a means for dissolving ozone in wastewater located downstream of the Venturi injector, and an ultraviolet emitter located downstream of the means for dissolving ozone in wastewater.

Furthermore, preferably the invention relates to a plant for fertilizer disposal in wastewater comprising a wastewater tank and a pump for supplying wastewater from the tank to a closed hydraulic circuit comprising sequentially arranged a Venturi injector, the main inlet of which is connected to the pump for supplying water from the tank, characterized in that the Venturi injector comprises an additional inlet is connected to a means for generating an ozone-air mixture, a means for dissolving ozone in wastewater located downstream of the Venturi injector, and an ultraviolet emitter located downstream of the means for dissolving ozone in wastewater.

In the sense of the present invention pesticides are substances that are used to control pests. They include herbicides, insecticides, nematicides, fungicides, bactericides and molluscicides. Pesticides can be classified based upon their mode of action, which indicates the exact biological mechanism which the pesticide disrupts. The modes of action are important for resistance management, and are categorized and administered by the insecticide, herbicide, and fungicide resistance action committees, which are known by the skilled person.

In a preferred embodiment the pesticides are selected from terbuthylazine and S-metolachlor.

In the sense of the present invention fertilizers are substances of any material of natural or synthetic origin that is applied to soil or to plant tissues to supply plant nutrients. For most modern agricultural practices, fertilization focuses on three main macro nutrients: nitrogen (N), phosphorus (P), and potassium (K) with occasional addition of supplements like rock flour for micronutrients such as copper (Cu), iron (Fe), manganese (Mn), molybdenum (Mo), zinc (Zn), boron (B), silicon (Si), cobalt (Co) and vanadium (V).

Wastewater is a complex material. In the sense of the invention the wastewater comprises before treatment (start, cycle 0) according to the invention 1 - 1000 mg/L, pesticides, preferably 10 - 500 mg/L pesticides, more preferably 20 - 250 mg/L pesticides, in particular 23 - 100 mg/L pesticides.

The wastewater comprises after treatment (end, cycle 1-100, preferably 2-48) according to the invention 0,007 - 2,0 mg/L pesticides, preferably, 0,01 - 0,1 mg/L pesticides, in particular 0,015 - 0,035 mg/L pesticides.

In particular, the wastewater passes through a closed hydraulic circuit and the number of circulation cycles is from 1 to 100, preferably, 2 to 48.

The residence time of a fluid volume is the total time that the volume has spent inside a control volume (e.g., tank). The residence time of a set of volume is quantified in terms of the frequency distribution of the residence time in the set, which is known as residence time distribution (RTD), or in terms of its average, known as mean residence time.

The mean residence time of the wastewater in the tank is 30 min to 1440 min, preferably 60 min to 720 min, in particular 100 min to 300 min.

According to one of the preferred embodiments of the method, the wastewater is supplied from the tank to the closed hydraulic circuit by a pump, preferably a circulation vortex pump.

According to another preferred embodiment of the method, the tank, Venturi injector, the pump, the mixer and the ultraviolet treatment, if present, form a hydraulic circuit, preferably, a closed hydraulic circuit.

In another preferred embodiment of the method, the tank is operated at temperature in the range of 5 °C to 45 °C, preferably in the range of 10 °C to 30 °C.

In another preferred embodiment of the method, the tank is operated at manometric pressure in the range of 0,0 bar to 0,1 bar, preferably in the range of 0,0 bar to 0,05 bar.

Manometric pressure or relative pressure denotes pressure that is measured in relation to atmospheric pressure.

According to another preferred embodiment of the method, the wastewater is enriched, preferably saturated, with an ozone-air mixture by supplying it through a Venturi injector, an additional inlet of which is connected to an ozone generator.

According to another preferred embodiment of the method, for dissolving ozone in the wastewater, it is passed through a mixer. Suitable mixers are selected from dynamic mixtures and static mixers, preferred are static mixers.

According to another preferred embodiment of the method, the ozone-enriched water or the wastewater-ozone mixture obtained in step f) comprises 10 to 40 mg/L ozone.

Preferably, the ozone-enriched water exiting the Venturi injector or the wastewater-ozone mixture obtained in step f) is an ozone-saturated water.

According to another preferred embodiment of the method, the treatment of a portion of the ozone-saturated water with ultraviolet radiation is performed with a dose of at least 64 mJ/cm². The wave range of ultraviolet radiation is 200 to 400 nm, preferably 260 to 350 nm.

According to another preferred embodiment of the method, the excess ozone is collected from the tank and then destroyed by converting it to oxygen and carbon dioxide and emitting it into the atmosphere. In other words, the gas phase (overhead gas) in the tank comprises ozone, which is not dissolved in the wastewater. The overhead gas is recycled in a destructor to destroy ozone, preferably a coal destructor. The ozone is converted into oxygen and carbon dioxide. The resulting oxygen and carbon dioxide is emitted into the atmosphere.

The method according to the invention can principally be performed continuously, semicontinuously or discontinuously. Preference is given to a continuous process.

The object is also solved by a plant for pesticide disposal in wastewater to implement the method described above. The plant comprises a wastewater tank and a pump for supplying wastewater from the tank to a closed hydraulic circuit comprising sequentially arranged Venturi injector, the main inlet of which is connected to the pump for supplying water from the tank, and the additional inlet is connected to a means for forming an ozone-air mixture, a means for dissolving ozone in wastewater located downstream of the Venturi injector, and an ultraviolet emitter located downstream of the means for dissolving ozone in wastewater. According to the invention, the plant comprises downstream of the means for dissolving ozone in wastewater a wastewater supply line to the wastewater tank and a parallel wastewater supply line to the wastewater tank at which said ultraviolet emitter is installed.

According to one of the preferred embodiments of the plant, a pump, preferably a circulation vortex pump is used as a pump for supplying wastewater from the tank to the closed circuit.

According to one of the preferred embodiments of the plant, the means of forming an ozone-air mixture comprises an ozone generator, the outlet of which is connected to an additional inlet of the Venturi injector.

According to one of the preferred embodiments of the plant, a static mixer is used to dissolve ozone in the wastewater.

According to one of the preferred embodiments of the plant, the ultraviolet emitter comprises a medium-pressure ultraviolet lamp with polychromatic ultraviolet radiation with a dose of at least 64 mJ/cm2. The wave range of ultraviolet radiation is 200 to 400 nm, preferably 260 to 350 nm.

According to one of the preferred embodiments of the plant, the wastewater tank additionally comprises sequentially arranged degassing system and ozone destructor, the outlet of the latter being connected to the atmosphere.

The technical effect is that within a short period of time (the number of recirculation cycles of wastewater that passes through a closed hydraulic circuit), almost complete destruction of pesticides is achieved with the formation of simple non-toxic substances and gases that are released into the atmosphere from the wastewater collecting tank. Thus, no additional disposal is required, which increases energy efficiency and significantly accelerates pesticide degradation. This technical effect is achieved through sequential and combined oxidation processes caused by oxygen, ozone, ultraviolet rays and hydroxyl radicals during the multiple circulation of the water to be treated.

In particular, wastewater passes through a closed hydraulic circuit and the number of circulation cycles is from 1 to 100, preferably, 2 to 48.

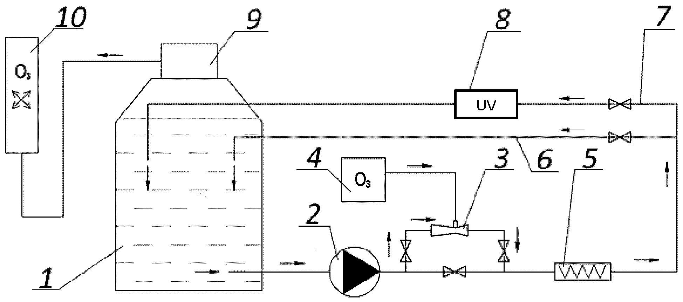

A more detailed explanation of the improvement of the oxidation mechanism will be given below in an example of a method for pesticide disposal in wastewater and a plant for its implementation. An example of the plant is shown in the figure, which shows a structural scheme of the plant. The above examples and figures do not limit other possible embodiments of the invention, but only explain its essence and support its feasibility.

The following notations are used in the figure:
1 - wastewater tank,
2 - circulation vortex pump,
3 - Venturi injector,
4 - ozone generator,
5 - static mixer,
6 - wastewater supply line,
7 - wastewater supply line with an ultraviolet emitter,
8 - medium-pressure ultraviolet lamp,
9 - gas separator valve,
10 - carbon destructor of ozone.

The plant for pesticide disposal in wastewater according to the invention comprises a wastewater tank (1) and a circulation vortex pump (2) for supplying wastewater from the tank to a closed hydraulic circuit for returning wastewater to the tank (1). The closed hydraulic circuit comprises sequentially arranged Venturi injector (3), the main inlet of which is connected to the circulation vortex pump (2), and the additional inlet is connected to the ozone generator (4), which is a part of the means of forming an ozone-air mixture, and the means of dissolving ozone in wastewater, which is a static mixer (5) located downstream of the Venturi injector (3). Downstream of the static mixer (5), the closed hydraulic circuit is divided into a wastewater supply line (6) and a parallel wastewater supply line (7), at which an ultraviolet emitter with a medium-pressure ultraviolet lamp (8) is installed. The wastewater tank (1) additionally comprises sequentially arranged degassing system in the form of a gas separator valve (9) for excess ozone and a carbon (manganese oxide) destructor of ozone (10), the outlet of which is connected to the atmosphere.

Disposal of pesticides in wastewater by the above described plant is performed as follows. Water containing pesticides is collected in a wastewater tank (1), e.g. after rinsing containers or diluting unused pesticides to be disposed. The circulation vortex pump (2) is used to supply water to the hydraulic closed circuit. An ozone-air mixture from an ozone generator (4) is sucked into the water through a Venturi injector (3) due to the effect of rarefaction. After that, the water passes through a static mixer (5), where the maximum ozone dissolution occurs. After that, the flow of ozone-enriched wastewater is divided into two parts. One of them immediately returns to the tank (1) through the wastewater supply line (6), and the second passes through the ultraviolet emitter of the wastewater supply line (7). Under the exposure to polychromatic ultraviolet radiation with a dose of at least 64 mJ/cm² from a medium-pressure ultraviolet lamp (8), hydroxyl radicals with an extremely high oxidizing potential (2.33 V) are formed in water containing dissolved ozone. Simultaneously, when exposed to ultraviolet radiation (UV), ozone (O₃) absorbs photons and converts to oxygen. Therefore, a part of the wastewater flow is returned to the tank (1) immediately after the ozone is dissolved in it, without ultraviolet radiation treatment, thereby ensuring the constant presence of ozone dissolved in water in the tank (1).

The degradation reaction of pesticides in wastewater occurs according to the following mechanism: Pesticides + O₃ + UV + OH˙ + O₂ = simple substances + CO₂ + H₂O. Wastewater recycling (the cycle of wastewater circulation containing pesticides) is repeated several times. The number of circulation cycles depends on the type of pesticide, its concentration and the required degree of degradation.

Excess ozone from the tank passes into a gas separation valve (9) and then into a coal ozone destructor (10), where it is converted into oxygen and carbon dioxide, which are released into the atmosphere, ensuring that no potentially harmful products requiring additional disposal are formed.

Thus, the claimed method for pesticide disposal in wastewater and the plant for its implementation provide high universality of the process with respect to all types of pesticides, eliminate the necessity for consumable materials, ensure the absence of potentially harmful products requiring additional disposal, increase energy efficiency and significantly accelerate pesticide degradation.

### Example:

The effectiveness of the method according to the invention is confirmed by the studies of the Research and Testing Toxicological Center of the STATE ENTERPRISE "SCIENTIFIC CENTER OF PREVENTIVE TOXICOLOGY, FOOD AND CHEMICAL SAFETY NAMED AFTER ACADEMICIAN L.I. MEDVED OFTHE MINISTRY OF HEALTH PROTECTION OF UKRAINE"

| | |
|---|---|
| Sample 1: | active substance: terbuthylazine and S-metolachlor, test solution - 1 l |
| Packaging: | conical glass flasks with a capacity of 250 mL |
| Cycle number: | 16 |

The results are shown in the following table.

| | Concentration Cycle 0* (start) | Concentration Cycle 16* (end) | method |
|---|---|---|---|
| terbuthylazine | 24,3 mg/L | 0,0184 mg/L | CIPAC /234/EC/M/- (Vol. IB, P.1898 |
| S- metolachlor | 51,48 mg/L | 0,031 mg/L | CIPAC /400/EC/M/- (Vol. D, P. 134) |

| | | | |
|---|---|---|---|
| * Mass concentration, the concentration is calculated based on the initial volume of the wash solution (500 I) | | | |

As a result of the experiments, it was determined that the concentration of pesticides in the wash water decreases: for terbuthylazine by 1320 times, for S-metolachlor by 1660 times.

## Claims

1. A method for pesticide disposal in wastewater, wherein the method comprises collecting wastewater in a tank, supplying wastewater from the tank to a closed hydraulic circuit for returning wastewater to the tank, wherein in the closed hydraulic circuit the wastewater is enriched with an ozone-air mixture, followed by dissolving ozone in it and treating the ozone-enriched water with ultraviolet radiation, **characterized in that** in the closed hydraulic circuit, a part of the wastewater after dissolving ozone in it is returned to the tank without treatment with ultraviolet radiation, and another part of the wastewater after dissolving ozone in it is supplied to the tank after treatment with ultraviolet radiation.

2. The method according to claim 1 comprising the steps
a) collecting the wastewater in a tank T;
b) feeding the effluent from the wastewater tank in to the hydraulic circuit;
c) optionally dividing the wastewater in two or more substreams;
d) leading the effluent from the wastewater tank of step b) or at least one of the substreams from step c) through a Venturi injector connected to an ozone generator, wherein the wastewater is brought into contact with ozone-air mixture to obtain a wastewater-ozone mixture;
e) combining the substream, if present;
f) mixing the ozone-containing stream in at least one mixer;
g) the wastewater-ozone mixture obtained in step f) is divided in at least two parallel streams
g1) treating the wastewater-ozone mixture obtained in step f) with ultraviolet radiation and stream g1) returns back directly into the tank T or after recombination with at least one of the parallel streams;
g2) stream g2) returns back without ultraviolet radiation treatment directly into the tank T or a after recombination with at least one of the parallel stream treated with ultraviolet radiation.

3. The method according to claim 1 or 2, wherein the tank, Venturi injector, the mixer and the ultraviolet treatment, if present, form a hydraulic circuit, preferably a closed hydraulic circuit.

4. The method according to any of the preceding claims, wherein the ozone-enriched water exiting the Venturi injector or the wastewater-ozone mixture obtained in step f) comprises 10 to 40 mg/L ozone.

5. The method according to any of the preceding claims, wherein the wave range of ultraviolet radiation is 200 to 400 nm, preferably 260 to 350 nm.

6. The method according to any of the preceding claims, wherein the mean residence time of the wastewater in the tank is 30 min to 500 min, preferably 60 min to 400 min, in particular 100 min to 300 min.

7. The method according to any of the preceding claims, wherein the wastewater passes through a closed hydraulic circuit and the number of circulation cycles is from 1 to 100, preferably, 2 to 48.

8. The method according to any of the preceding claims, wherein the wastewater comprises pesticides and/or fertilizers.

9. The method according to claim 8, wherein the wastewater comprises pesticides, preferably wherein the pesticides are selected from terbuthylazine and S-metolachlor.

10. A plant for pesticide disposal in wastewater comprises a wastewater tank and a pump for supplying wastewater from the tank to a closed hydraulic circuit comprising sequentially arranged Venturi injector, the main inlet of which is connected to the pump for supplying water from the tank, **characterized in that** an additional inlet is connected to a means for generating an ozone-air mixture, a means for dissolving ozone in wastewater located downstream of the Venturi injector, and an ultraviolet emitter located downstream of the means for dissolving ozone in wastewater.

11. The plant for pesticide disposal in wastewater according to claim 10, wherein the wastewater tank and a pump for supplying wastewater from the tank to a closed hydraulic circuit comprising sequentially arranged Venturi injector, the main inlet of which is connected to the pump for supplying water from the tank, **characterized in that** the Venturi injector comprising an additional inlet is connected to a means for generating an ozone-air mixture, a means for dissolving ozone in wastewater located downstream of the Venturi injector, and an ultraviolet emitter located downstream of the means for dissolving ozone in wastewater.

12. The plant for pesticide disposal in wastewater according to claim 10 or 11, wherein the tank, Venturi injector, the mixer and the ultraviolet emitter form a hydraulic circuit, preferably a closed hydraulic circuit.

13. The plant for pesticide disposal in wastewater according to claim 10 to 12, wherein the ultraviolet emitter with a wave range of ultraviolet radiation of 200 to 400 nm.
